# EUROPÄISCHE PATENTSCHRIFT

(11) **EP 4 056 350 B1**
(45) Veröffentlichungstag und Bekanntmachung des Hinweises auf die Patenterteilung: **21.08.2024**
(21) Anmeldenummer: 21209725.7
(22) Anmeldetag: 22.11.2021
(51) Int. Cl.: B29C 49/42, B29C 49/06, B29C 49/28, B29C 49/64, B29C 49/78, B29K 67/00, B29K 23/00, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT ZWEI VORFORMLINGSPEICHERN**
DEVICE AND METHOD FOR FORMING PLASTIC PREFORMS INTO PLASTIC CONTAINERS WITH TWO PREFORM STORAGE DEVICES
DISPOSITIF ET PROCÉDÉ DE FORMAGE DE PRÉFORMES EN MATIÈRE PLASTIQUE EN RÉCIPIENTS EN MATIÈRE PLASTIQUE À PARTIR DE DEUX MÉMOIRES DE PRÉFORMAGE

(30) Priorität: 09.03.2021 DE 102021105667
(43) Veröffentlichungstag der Anmeldung: 14.09.2022
(73) Patentinhaber: Krones AG, 93073 Neutraubling (DE)
(72) Erfinder: Lappe, Ulrich, 93073 Neutraubling (DE); Hirdina, Jochen, 93073 Neutraubling (DE); Aust, Robert, 93073 Neutraubling (DE)
(74) Vertreter: Hannke Bittner & Partner mbB Regensburg

(56) Entgegenhaltungen:
- EP-A1- 3 141 500
- DE-A1- 102017 112 455
- US-A- 4 223 778
- US-A1- 2020 346 394

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Aus dem internen Stand der Technik der Anmelderin ist es dabei bekannt, dass Vorrichtungen zum Umformen von Kunststoffvorformlingen und insbesondere Blasmaschinen in der Regel ein einziger Vorformlingspeicher (Silo) für Vorformlinge zugeordnet ist, in welchen die Vorformlinge üblicherweise aus angelieferten Kartons, sogenannten Oktabins eingekippt werden. Aus diesem Silo werden die Vorformlinge über beispielswiese Förderbänder und/oder einem Hochförderer ausgetragen und einer Ausrichtvorrichtung zugeführt. Solche Vorrichtungen und Verfahren sind in den Patenschriften EP3141500A1, US2020/346394A1, DE102017112455A1 und US4223778A beschrieben.

In dieser Ausrichtvorrichtung werden die Vorformlinge dabei derart ausgerichtet, so dass ein geordneter Vorformlingstrom entsteht, welcher der Blasmaschine zugeführt wird. In einem (Linear)Ofen der Blasmaschine wird dieser Vorformling-Massestrom anschließend an die Ausrichtung einer kontinuierlichen Aufheizung unterzogen. Ist die Materialqualität homogen und das Aufheizverhalten für alle Vorformlinge gleich, so werden alle Vorformlinge am Ende des Ofens das gleiche Heizprofil bzw. die gleiche Temperatur aufweisen, wodurch im nachfolgenden Umformungs- bzw. Streckblasprozess in der Blasmaschine gleichmäßige Ergebnisse erreicht werden können.

Aus dem internen Stand der Technik der Anmelderin ist es dabei bekannt bzw. üblich, dass Vorformlinge aus verschiedenen Oktabins nacheinander in den Vorformlingspeicher geschüttet werden, wodurch sich Vorformlinge unterschiedlicher Produktionschargen miteinander vermischen. Liegen dabei unterschiedliche Vorformlingsqualitäten vor, vermischen sich diese ebenfalls. Sind diese Qualitäten unterschiedlich in Bezug auf Wärmeaufnahme, kommt es im nachfolgenden Linearofen zu variierenden Aufheizergebnissen was wiederum zu stark schwankenden Flaschenqualitäten im nachfolgenden Streckblasprozess führt, oder es können gar keine Flaschen mehr produziert werden, weil die Vorformlinge im Blasvorgang schlicht platzen.

Der vorliegenden Erfindung liegt daher die Aufgabe zugrunde eine Vorrichtung und ein Verfahren bereitzustellen, mit welcher/mit welchen eine einheitliche Qualität der umzuformenden Kunststoffvorformlinge bzw. der umgeformten Kunststoffbehältnisse erreicht werden kann. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher auf eine Vorrichtung zum Umformen von Kunststoffvorformlingen zu Kunststoffbehältnissen gerichtet, mit einer Zuführeinrichtung, um der Vorrichtung die Kunststoffvorformlinge zuzuführen, wenigstens einem ersten Vorformlingspeicher, wobei eine Vielzahl von Kunststoffvorformlingen unsortiert in dem Vorformlingspeicher angeordnet ist und mit einer Ausrichteinrichtung, um die Kunststoffvorformlinge vor der Zuführung zu der Vorrichtung in eine vorgegebene Position zu bringen.

Erfindungsgemäß weist die Vorrichtung dabei wenigstens einen zweiten Vorformlingspeicher auf, wobei in jedem Vorformlingspeicher eine Vielzahl von Kunststoffvorformlingen genau einer Produktionscharge aufnehmbar ist.

Es wird demnach erfindungsgemäß vorgeschlagen, statt wie im Stand der Technik üblich einen einzigen Vorformlingspeicher, der Vorrichtung wenigstens zwei Vorformlingspeicher zuzuordnen, in welchen jeweils nur ein Oktabin von Vorformlingen bzw. eine Produktionscharge von Vorformlingen gekippt wird. Bevorzugt werden dabei immer nur Vorformlinge aus einem Vorformlingspeicher der Folgemaschine und insbesondere der Blasformmaschine zugeführt, so dass eine Vermischung von Vorformlingen verschiedener Produktionschargen verhindert wird. Die Vorformlinge sind dabei innerhalb des Vorformlingspeichers unsortiert und liegen bevorzugt in einer sogenannten Preformschütte vor.

Die Zufuhr der Vorformlinge aus einem Vorformlingspeicher, insbesondere dem ersten Vorformlingspeicher, erfolgt dabei solange, bis dieser bevorzugt vollständig geleert ist. Erst dann beginnt die Zufuhr zu der Blasformmaschine von Vorformlingen aus dem anderen Vorformlingspeicher, insbesondere dem zweiten Vorformlingspeicher, und demnach von Vorformlingen aus einer anderen Produktionscharge.

Durch diese Vorgehensweise wird bevorzugt auch ein kontinuierlicher Vorformlingstrom zu der Blasformmaschine oder einer nachfolgenden Maschine, ohne größere Unterbrechungen sichergestellt, da die Zufuhr nicht durch erneute Befüllung des Vorformlingspeichers unterbrochen werden muss. Der geleerte Vorformlingspeicher, kann zwischenzeitlich mit Vorformlingen einer neuen Produktionscharge wieder befüllt werden, während die Zufuhr von Vorformligen aus dem zweiten Vorformlingspeicher fortgesetzt wird. Ist der zweite Vorformlingspeicher geleert, kann entsprechend wieder eine Zufuhr von Vorformlingen aus dem ersten Vorformlingspeicher erfolgen und der zweite, nun geleerte, Vorformlingspeicher mit Vorformlingen einer neuen Produktionscharge befüllt werden. Die Zufuhr von Vorformlingen aus einem Vorformlingspeicher kann dabei bevorzugt in einfacher Weise durch beispielsweise Abschalten eines Förderbandes am Auslass des Silos oder einen Sperrfinger in der Zuführung zur Blasmaschine oder dergleichen verhindert werden.

Vorteilhaft wird hierdurch auch vermieden, dass einzelne Vorformlinge einer Produktionscharge deutlich länger in dem Speicher verbleichen als andere Vorformlinge der gleichen Charge, was bei der Verwendung lediglich eines Speichers und der Vermischung mehrerer Chargen häufig vorkommt. Durch das Vorsehen mehrerer und insbesondere zwei Vorformlingspeicher wird demnach bevorzugt auch das FIFO (first in first out) Prinzip unterstützt.

Insbesondere bleiben demnach unterschiedliche Chargenqualitäten getrennt. Über eine Steuerungseinrichtung kann der Anlage dabei bevorzugt auch der Zeitpunkt des Wechsels auf eine andere Produktionscharge mitgeteilt werden. Aufgrund der gleichbleibenden Vorformlingsqualität wird zudem eine übermäßig hohe Scrap Rate durch Fehlblasungen vermieden.

Dabei ist es insbesondere auch vorteilhaft, dass, wie unten noch genauer erläutert wird, geeignete Sensoren vorgesehen sind, welche beispielsweise das Strahlungsaufnahmeverhalten der einzelnen Vorformlingchargen überwachen (z. B. IR Absorptionsmessung über IR Spektroskopie und/oder Messung von Unterschieden in der Transmission im sichtbaren Lichtspektrum) und diese Information an den Ofen senden, welcher bevorzugt entsprechend, wenn notwendig, die Heizleistung anpasst oder bei zu starker Abweichung die Zufuhr der neuen Charge komplett sperrt, um einen Bedienereingriff zu erzwingen.

Die Vorformlinge werden dabei üblicherweise nach der Herstellung in beispielswiese einer Spritzgussmaschine chargenweise in sogenannten Oktabins gelagert und zum weiteren Produktionsort oder einem Lager transportiert. Hierdurch wird demnach bereits sichergestellt, dass bis zu ihrer weiteren Behandlung in der Umformungseinrichtung oder dergleichen keine Vermischung einzelner Produktionschargen erfolgt.

Bei der oben erwähnten Zuführeinrichtung handelt es sich bevorzugt um ein Förderband, welches die Vorformlinge von dem Vorformlingspeicher zu der Ausrichteinrichtung fördert. Bei der Ausrichteinrichtung handelt es sich dabei besonders bevorzugt um einen Rollensortierer. Denkbar wäre dabei allerdings auch Scheibensortierer. Besonders bevorzugt ist zwischen den Vorformlingspeichern und der Ausrichteinrichtung ein Hochförderer vorgehsehen.

Der Rollensortierer umfasst dabei zwei Führungsschienen, welche parallel zueinander ausgerichtet sind. Der Abstand dieser Führungsschienen ist dabei bevorzugt so groß, dass ein Grundkörper des Vorformlings hindurchtreten kann, ein Tragring (oder sonstiger Überstand über den Vorformlingkörper) des Vorformlings jedoch nicht. Der Tragring liegt dabei auf den Führungsschienen auf, so dass die Vorformlinge bevorzugt entlang der Führungsschienen gleiten können. Hierzu sind die Führungsschienen bevorzugt zudem in einem Neigungswinkel zwischen 11° und 60°, bevorzugt zwischen 15° und 55° und besonders bevorzugt zwischen 20° und 50° zur Erdoberfläche angeordnet. Bei Vorformlingen ohne Tragring werden hängen die Vorformlinge bevorzug an ihrem Sicherungsring (tamper evidence ring) an den Führungsschienen.

Bevorzugt weisen die Vorformlingspeicher jeweils wenigstens eine Sensoreinrichtung auf, welche einen Füllstand des Vorformlingspeichers erfasst. Diese Sensoreinrichtung kann dabei bevorzugt mit einer Steuerungseinrichtung kommunizieren, welche die Entleerung der Vorformlingspeicher steuert, um bei einem niedrigen Füllstand die Entleerung des anderen Vorformlingspeichers einleiten zu können. Die Füllstandserfassung des Vorformlingspeichers kann bevorzugt auch über eine Gewichtserfassung erfolgen.

Besonders bevorzugt sind die Vorformlingspeicher dazu geeignet und bestimmt jeweils wenigstens ein Volumen von 2 m³ Vorformlingen aufzunehmen, bevorzugt wenigstens 1,5 m³ Vorformlingen und besonders bevorzugt wenigstens 1,2 m³ Vorformlingen.

Der erste Vorformlingspeicher und der zweite Vorformlingspeicher sind dabei derart zueinander bzw. zu der Zuführeinrichtung angeordnet, so dass die Lücke zwischen den Vorformlingen, wenn auf einen anderen Vorformlingspeicher zur Entleerung zugegriffen werden soll, möglichst gering ist. Denkbar ist dabei, dass die Vorformlingspeicher parallel zueinander oder hintereinander angeordnet sind oder in einem von Null Grad verschiedenen Winkel zu der Zuführeinrichtung bzw. dem Transportpfad der Vorformlinge.

Bei den Kunststoffbehältnisse handelt es sich dabei bevorzugt um Kunststoffflaschen und insbesondere Getränkebehältnisse oder Getränkeflaschen. Diese sind dabei bevorzugt aus einem Material hergestellt sind, welches aus einer Gruppe von Materialien ausgewählt ist, welche PET, HDPE, PP und dergleichen enthält.

Bei einer bevorzugten Ausführungsform weist die Vorrichtung eine Steuerungseinrichtung auf, welche dazu geeignet und bestimmt ist, die Zufuhr der Kunststoffvorformlinge zu der Vorrichtung derart zu steuern, dass zuerst nur Kunststoffvorformlinge aus einem der beiden Vorformlingspeicher der Vorrichtung zugeführt werden. In einer weiteren bevorzugten Ausführungsform steuert die Steuerungseinrichtung den ersten Vorformlingspeicher und den zweiten Vorformlingspeicher derart an, dass nach der Entleerung des einen Vorformlingspeichers, der Vorrichtung die Kunststoffvorformlinge aus dem anderen Vorformlingspeicher zugeführt werden. Wie oben dargestellt, erfolgt dabei beispielweise zuerst eine Zufuhr von Vorformlingen aus dem ersten Vorformlingspeicher und dann eine Zufuhr von Vorformlingen aus dem zweiten Vorformlingspeicher, wodurch eine Vermischung verschiedener Produktionschargen verhindern wird. Möglich ist dabei auch, dass zuerst eine Zufuhr von Vorformlingen aus dem zweiten Vorformlingspeicher erfolgt und dann eine Zufuhr von Vorformlingen aus dem ersten Vorformlingspeicher.

In einer weiteren bevorzugten Ausführungsform erfolgt die Zufuhr der Kunststoffvorformlinge aus dem ersten Vorformlingspeicher und die Zufuhr der Kunststoffvorformlinge aus dem zweiten Vorformlingspeicher kontinuierlich. D.h., dass sobald der erste oder zweite Vorformlingspeicher geleert wurde unmittelbar mit der Zufuhr von Vorformlingen aus dem anderen Vorformlingspeicher begonnen wird. Wie oben erwähnt wird dies mit Hilfe von Sensoreinrichtungen gesteuert, welche einen Füllstand der Vorformlingspeicher erfassen. Dies ist vorteilhaft, da so ohne größere Unterbrechungen bzw. Lücken in der Vorformlingzufuhr, auf den anderen Vorformlingspeicher umgestellt werden kann und die Produktion in der Blasformmaschine ungehindert fortgesetzt werden kann.

Bei einer weiteren bevorzugten Ausführungsform ist zwischen der Vorrichtung zum Umformen und der Zuführeinrichtung eine Heizeinrichtung mit einer Vielzahl von Heizelementen zum Erwärmen der Kunststoffvorformlinge angeordnet. Genauer ist die Heizeinrichtung bevorzugt zwischen der Vorrichtung zum Umformen und der Ausrichteinrichtung angeordnet. Die Kunststoffvorformlinge werden dabei bevorzugt auf eine für die Blasformung notwendige Temperatur erwärmt. Bei den Heizelementen handelt es sich vorteilhaft um Heizboxen, wie Infrarotstrahler oder Mikrowellenerwärmungseinrichtungen. Bevorzugt kann dabei zwischen der Ausrichteinrichtung und der Heizeinrichtung ein Zuführschiene angeordnet sein, welche in einem Neigungswinkel zwischen 11° und 60°, bevorzugt zwischen 15° und 55° und besonders bevorzugt zwischen 20° und 50° zur Erdoberfläche angeordnet ist, so dass die Vorformlinge bevorzugt über das Schwerkraftprinzip der Heizeinrichtung zugeführt werden.

Bevorzugt ist die Vielzahl von Heizelementen entlang des Transportpfads de Vorformlinge durch die Heizeinrichtung angeordnet. Die Kunststoffvorformlinge werden dabei in der Heizeinrichtung entlang eines im Wesentlichen geradlinigen Transportpfads transportiert, wobei entlang dieses geradlinigen Transportpfads die Vielzahl von Heizelementen angeordnet ist. Die Heizelemente sind besonders bevorzugt stationär angeordnet, so dass die Kunststoffvorformlinge während des Transports an diesen vorbeibewegt und erwärmt bzw. auf eine vorgegebene Temperatur gebracht werden

Die Heizeinrichtung weist dabei bevorzugt ein umlaufendes Transportmittel wie beispielsweise Transportbänder oder an dem Transportmittel angeordnete Halteeinrichtungen wie Klammern auf, welche die Kunststoffvorformlinge oberhalb des Tragrings greifen.

Die Heizeinrichtung weist dabei bevorzugt einen ersten und einen zweiten linearen Transportpfad auf, welche bevorzugt parallel zueinander angeordnet sind. Der erste lineare Transportpfad und der zweite lineare Transportpfad sind dabei bevorzugt über gekrümmte Abschnitte miteinander verbunden.

Die Vorrichtung zum Umformen von Kunststoffvorformlingen zu Kunststoffbehältnisse, welche bevorzugt eine Blasformmaschine ist, ist bevorzugt stromabwärts der Heizeinrichtung angeordnet und formt die Kunststoffvorformlinge nach der Erwärmung in der Heizeinrichtung zu Kunststoffbehältnissen um. Die Kunststoffvorformlinge werden demnach bevorzugt nach der Erwärmung in der Heizeinrichtung der Blasformmaschine zugeführt und durch Beaufschlagung mit einem flüssigen oder gasförmigen Medium innerhalb von Blasstationen zu Kunststoffbehältnissen expandiert.

Bei einer weiteren bevorzugten Ausführungsform weist die Vorrichtung und insbesondere die Zuführeinrichtung und/oder der erste und zweite Vorformlingspeicher wenigstens eine Sensoreinrichtung auf, welche wenigstens einen für die Fähigkeit der Temperaturaufnahme der Vorformlinge charakteristischen Wert erfasst. Besonders bevorzugt ist diese Sensoreinrichtung dabei jeweils an einem Übergabepunkt des Vorformlingspeichers an die Zuführeinrichtung angeordnet. Bevorzugt weist die Vorrichtung mehrere Sensoreinrichtungen auf, welche mehrere Werte ermitteln, welche für die Fähigkeit der Temperaturaufnahme der Vorformlinge charakteristisch sind und/oder welche einen Füllstand der Vorformlingspeicher ermitteln. In einer weiteren bevorzugten Ausführungsform weist dabei die Heizeinrichtung eine weitere Steuerungseinrichtung auf, welche die Heizleistung der Heizelemente in Abhängigkeit des von der Sensoreinrichtung erfassten charakteristischen Wertes steuert.

Die Sensoreinrichtung dient demnach insbesondere dazu, die Temperatur der Vorformlinge bzw. einen für die Temperatur der Vorformlinge charakteristischen Wert zu erfassen und den nachfolgenden Heizprozess bzw. die Heizleistung der Heizelemente entsprechend anzupassen, sollten einzelne Vorformlinge einen höheren oder niedrigeren Temperaturwert aufweisen. Bevorzugt wird dabei die Temperatur bzw. ein für die Temperatur charakteristischer Wert für jeden einzelnen Vorformling erfasst. Hierdurch kann eine gleichbleibende bzw. einheitliche Qualität bei der Umformung der Kunststoffvorformlinge zu den Kunststoffbehältnissen gewährleistet werden.

Über eine geeignete Sensor- und Regelungstechnik kann demnach bei einer abweichenden Qualität bzw. Temperatur die Ofenregelung so nachgeführt werden, dass an der Blasformmaschine wieder gleichwarme Vorformlinge ankommen und dieser Unterschied in der Heizeinrichtung kompensiert wurde.

Die vorliegende Erfindung ist weiterhin auch auf ein Verfahren zum Umformen von Kunststoffvorformlingen zu Kunststoffbehältnissen, wobei eine Vielzahl von Kunststoffvorformlingen, welche unsortiert in einem ersten Vorformlingspeicher angeordnet ist, einer Vorrichtung zum Umformen von Kunststoffvorformlingen zugeführt wird und die Kunststoffvorformlinge vor der Zuführung in eine vorgegebene Position gebracht werden

Erfindungsgemäß ist wenigstens ein erster Vorformlingspeicher und wenigstens ein zweiter Vorformlingspeicher vorgesehen, wobei in jedem Vorformlingspeicher eine Vielzahl von Kunststoffvorformlingen genau einer Produktionscharge angeordnet ist.

Es wird demnach auch verfahrensseitig vorgeschlagen, statt wie im Stand der Technik üblich, einen einzigen Vorformlingspeicher wenigstens zwei Vorformlingspeicher vorzusehen, in welchen jeweils nur ein Oktabin von Vorformlingen bzw. eine Produktionscharge von Vorformlingen gekippt wird, so dass keine Vermischung von Vorformlingen aus unterschiedlichen Produktionschargen erfolgt.

Dabei werden bei einem bevorzugten Verfahren zuerst nur Kunststoffvorformlinge aus einem der beiden Vorformlingspeicher der Vorrichtung zugeführt. Bei einem weiteren bevorzugten Verfahren werden nach der Entleerung des einen Vorformlingspeichers, der Vorrichtung die Kunststoffvorformlinge aus dem anderen Vorformlingspeicher zugeführt.

Demnach wird auch verfahrensseitig vorgeschlagen, dass zuerst ausschließlich Vorformlinge aus dem ersten Vorformlingspeicher der Vorrichtung zugeführt werden und erst nach der vollständigen Entleerung des ersten Vorformlingspeichers der Vorrichtung die Vorformlingen aus dem zweiten Vorformlingspeicher zugeführt werden. Möglich wäre dabei auch zuerst den zweiten Vorformlingspeicher zu entleeren und anschließend Vorformlinge aus dem ersten Vorformlingspeicher zuzuführen.

Die oben beschriebene Vorrichtung ist dabei insbesondere dazu eingerichtet und dafür vorgesehen, dieses beschriebene Verfahren durchzuführen, d. h., dass alle für die obig beschriebene Vorrichtung ausgeführten Merkmale ebenso für das hier beschriebene Verfahren offenbart sind und umgekehrt.

Weitere Vorteile und Ausführungsformen ergeben sich aus den beigefügten Zeichnungen.

Darin zeigt:

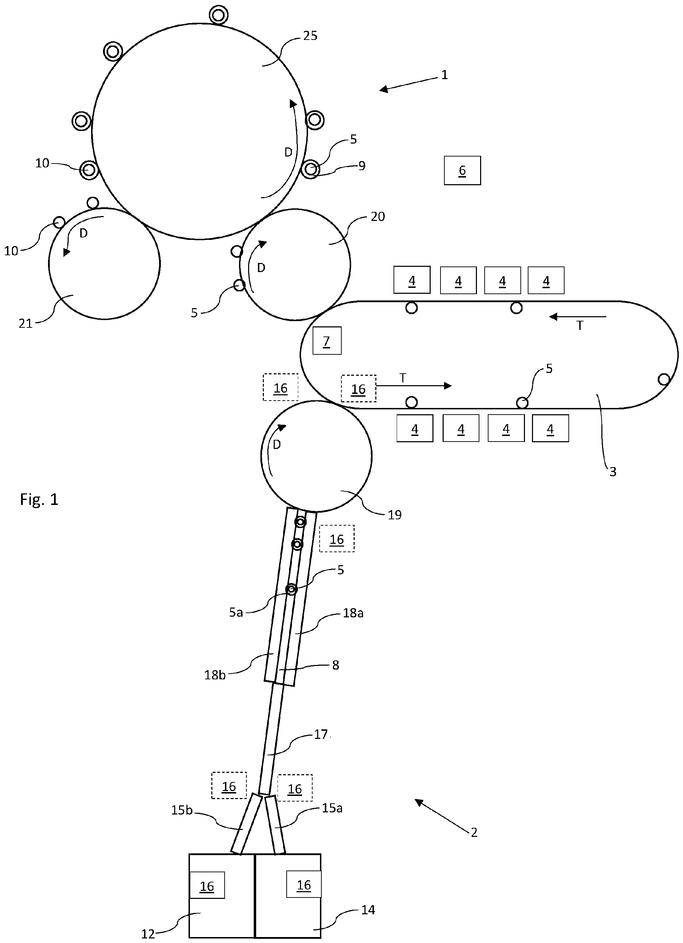

- Fig. 1: eine schematische Darstellung einer erfindungsgemäßen Vorrichtung mit zwei Vorformlingspeichern.

Figur 1 zeigt eine schematische Darstellung einer erfindungsgemäßen Vorrichtung 1 mit zwei Vorformlingspeichern 12, 14. Ausgehend von diesen Vorformlingspeichern 12, 14 werden die Kunststoffvorformlinge 5 über eine Zuführeinrichtung 2 der Vorrichtung 1 zugeführt. Insbesondere werden dabei zuerst nur Kunststoffvorformlinge 5 eines Vorformlingspeichers 12, 14 der Vorrichtung 1 zugeführt, um eine Vermischung der einzelnen Produktionschargen zu verhindern. Das Bezugszeichen 16 kennzeichnet jeweils eine Sensoreinrichtung, welche beispielsweise einen Füllstand des Vorformlingspeichers und/oder einen Wert, welcher für die Fähigkeit der Temperaturaufnahme der Vorformlinge charakteristisch ist, erfasst. Bevorzugt ist es auch möglich, dass mehrere Sensoreinrichtungen vorgesehen sind, welche unterschiedliche Werte ermitteln oder mehrere Sensoreinrichtungen an unterschiedlichen Orten der Vorrichtung vorgesehen sind, wie durch die gestrichelten Linien der mit dem Bezugszeichen 16 versehenen Einrichtungen dargestellt ist.

Jeder Vorformlingspeicher 12, 14 kann ein Zuführband 15a, 15b aufweisen, über welchen die Vorformlinge einem Hochförderer 17 zugeführt werden. Denkbar wäre allerdings auch, dass die Vorformlinge direkt und ohne zusätzliche Zuführschienen 15a, 15b dem Hochförderer 17 zugeführt werden. In den Vorformlingspeichern 12, 14, den Zuführschienen 15a, 15b und dem Hochförderer 17 liegen die Vorformlinge in unsortierter Form vor. An den Hochförderer 17 schließt sich eine Ausrichteinrichtung 8, hier in Form eines Rollensortierers an, um die Vorformlinge auszurichten. In dieser Ausführungsform weist die Ausrichteinrichtung 8 zwei Führungsschienen auf, welche parallel zueinander angeordnet sind und derart voneinander beabstandet sind, so dass ein Grundkörper der Kunststoffvorformlinge 5 durch diesen hindurchtreten kann, ein Tragring 5a oder sonstiger überstehender Teil des Vorformlings des Kunststoffvorformlings 5 jedoch nicht.

Das Bezugszeichen 19 kennzeichnet ein Zuführrad, wie beispielsweise einen Zuführstern, welches die ausgerichteten Kunststoffvorformlinge einer Heizeinrichtung 3 zuführt. Die Heizeinrichtung 3 ist dabei dazu geeignet und bestimmt die Kunststoffvorformlinge 5 auf eine für die Blasformung notwendige Temperatur zu erwärmen, wobei hierzu eine Vielzahl von Heizelementen 4 entlang des Transportpfades T der Kunststoffvorformlinge 5 angeordnet ist. Das Bezugszeichen 7 kennzeichnet die weitere Steuerungseinrichtung, welche in Abhängigkeit des von der Sensoreinrichtung 16 erfassen charakteristischen Wertes die Heizleistung der Heizelemente 4 steuern kann und das Bezugszeichen 6 die Steuerungseinrichtung, welche dazu geeignet und bestimmt ist, die Zufuhr der Kunststoffvorformlinge 5 zu der Vorrichtung 1 derart zu steuern und insbesondere derart zu steuern, dass zuerst nur Kunststoffvorformlinge 5 aus einem der beiden Vorformlingspeicher 12, 14 der Vorrichtung 1 zugeführt werden. Anstelle des Zuführrades 19 oder auch zwischen der Ausrichteinrichtung 8 und dem Zuführrad 19 kann bevorzugt auch eine (nicht dargestellte) Zuführschiene angeordnet sein, welche die Vorformlinge über Schwerkraft der Heizeinrichtung 3 zuführt.

Mittels eines weiteren Zuführrades 20 werden die erwärmten Kunststoffvorformlinge 5 der Blasformmaschine 25 zugeführt und hier innerhalb von Blasstationen 9 zu den Kunststoffbehältnissen 10. Nach der Umformung werden die Kunststoffbehältnisse 10 mittels eines Abführrades 21 von der Blasformmaschine 25 abgeführt. Das Bezugszeichen D kennzeichnet jeweils die Drehrichtung der Zu- und Abführräder sowie der Blasformmaschine.

### Bezugszeichenliste

- 1: Vorrichtung
- 2: Zuführeinrichtung
- 3: Heizeinrichtung
- 4: Heizelemente
- 5: Kunststoffvorformlinge
- 5a: Tragring oder anderer Überstand über den Vorformlingkörper
- 6: Steuerungseinrichtung
- 7: weitere Steuerungseinrichtung
- 8: Ausrichteinrichtung
- 9: Blasstation
- 10: Kunststoffbehältnisse
- 12: erster Vorformlingspeicher
- 14: zweiter Vorformlingspeicher
- 15a, 15b: Zuführschiene
- 16: Sensoreinrichtung
- 17: Hochförderer
- 18a, 18b: Führungsschiene
- 19: Zuführrad
- 20: Zuführrad
- 22: Abführrad
- 25: Blasformmaschine
- 26: Sensoreinrichtung

- D: Drehrichtung
- T: Transportpfad der Kunststoffvorformlinge 5

## Patentansprüche

1. Vorrichtung (1) zum Umformen von Kunststoffvorformlingen (5) zu Kunststoffbehältnissen (10), mit einer Zuführeinrichtung (2), um der Vorrichtung (1) die Kunststoffvorformlinge (5) zuzuführen, wenigstens einem ersten Vorformlingspeicher (12), wobei eine Vielzahl von Kunststoffvorformlingen (5) unsortiert in dem Vorformlingspeicher (12) angeordnet ist und mit einer Ausrichteinrichtung (8), um die Kunststoffvorformlinge (5) vor der Zuführung zu der Vorrichtung (1) in eine vorgegebene Position zu bringen,
**dadurch gekennzeichnet, dass**
die Vorrichtung (1) wenigstens einen zweiten Vorformlingspeicher (14) aufweist, wobei in dem ersten Vorformlingspeicher (12) und in dem zweiten Vorformlingspeicher (14) jeweils eine Vielzahl von Kunststoffvorformlingen (5) genau einer Produktionscharge aufnehmbar ist, so dass eine Vermischung von Vorformlingen verschiedener Produktionschargen verhindert wird, und wobei
Sensoren vorgesehen sind, welche das Strahlungsaufnahmeverhalten der einzelnen Vorformlingchargen überwachen und diese Information an eine Heizeinrichtung senden, welche, wenn notwendig, eine Heizleistung anpasst oder bei zu starker Abweichung die Zufuhr einer neuen Charge komplett sperrt, um einen Bedienereingriff zu erzwingen.

2. Vorrichtung (1) nach Anspruch 1,
**dadurch gekennzeichnet, dass**
die Vorrichtung (1) eine Steuerungseinrichtung (6) aufweist, welche dazu geeignet und bestimmt ist, die Zufuhr der Kunststoffvorformlinge (5) zu der Vorrichtung (1) derart zu steuern, dass zuerst nur Kunststoffvorformlinge (5) aus einem der beiden Vorformlingspeicher (12, 14) der Vorrichtung (1) zugeführt werden.

3. Vorrichtung (1) nach Anspruch 2,
**dadurch gekennzeichnet, dass**
die Steuerungseinrichtung (6) den ersten Vorformlingspeicher (12) und den zweiten Vorformlingspeicher (14) derart ansteuert, dass nach der Entleerung des einen Vorformlingspeichers (12, 14), der Vorrichtung (1) die Kunststoffvorformlinge (5) aus dem anderen Vorformlingspeicher (12, 14) zugeführt werden.

4. Vorrichtung (1) nach Anspruch 1,
**dadurch gekennzeichnet, dass**
die Zufuhr der Kunststoffvorformlinge (5) aus dem ersten Vorformlingspeicher (12) und die Zufuhr der Kunststoffvorformlinge (5) aus dem zweiten Vorformlingspeicher (14) kontinuierlich erfolgt.

5. Vorrichtung (1) nach Anspruch 1,
**dadurch gekennzeichnet, dass**
zwischen der Vorrichtung (1) und der Zuführeinrichtung (2) eine Heizeinrichtung (3) mit einer Vielzahl von Heizelementen (4) zum Erwärmen der Kunststoffvorformlinge (5) angeordnet ist.

6. Vorrichtung (1) nach Anspruch 1,
**dadurch gekennzeichnet, dass**
die Vorrichtung (1) und insbesondere die Zuführeinrichtung (2) und/oder der erste und zweite Vorformlingspeicher (12, 14) wenigstens eine Sensoreinrichtung (16) aufweist, welche wenigstens einen für die Fähigkeit der Temperaturaufnahme der Vorformlinge (5) charakteristischen Wert erfasst.

7. Vorrichtung (1) nach Anspruch 5 und 6,
**dadurch gekennzeichnet, dass**
die Heizeinrichtung (3) eine weitere Steuerungseinrichtung (7) aufweist, welche die Heizleistung der Heizelemente (4) in Abhängigkeit des von der Sensoreinrichtung (16) erfassten charakteristischen Wertes steuert.

8. Verfahren zum Umformen von Kunststoffvorformlingen (5) zu Kunststoffbehältnissen (10), wobei eine Vielzahl von Kunststoffvorformlingen (5), welche unsortiert in einem ersten Vorformlingspeicher (12) angeordnet ist, einer Vorrichtung (1) zum Umformen von Kunststoffvorformlingen (5) zugeführt wird und die Kunststoffvorformlinge (5) vor der Zuführung in eine vorgegebene Position gebracht werden,
**dadurch gekennzeichnet, dass**
wenigstens ein erster Vorformlingspeicher (12) und wenigstens ein zweiter Vorformlingspeicher (14) vorgesehen ist, wobei in dem ersten Vorformlingspeicher (12) und in dem zweiten Vorformlingpeicher (14) jeweils eine Vielzahl von Kunststoffvorformlingen (5) genau einer Produktionscharge angeordnet ist, so dass eine Vermischung von Vorformlingen verschiedener Produktionschargen verhindert wird, und wobei Sensoren vorgesehen sind, welche das Strahlungsaufnahmeverhalten der einzelnen Vorformlingchargen überwachen und diese Information an eine Heizeinrichtung senden, welche, wenn notwendig, eine Heizleistung anpasst oder bei zu starker Abweichung die Zufuhr einer neuen Charge komplett sperrt, um einen Bedienereingriff zu erzwingen.

9. Verfahren nach Anspruch 8,
**dadurch gekennzeichnet, dass**
die Kunststoffvorformlinge (5) zuerst nur aus einem der beiden Vorformlingspeicher (12, 14) der Vorrichtung (1) zugeführt werden.

10. Verfahren nach Anspruch 8,
**dadurch gekennzeichnet, dass**
nach der Entleerung des einen Vorformlingspeichers (12, 14), der Vorrichtung (1) die Kunststoffvorformlinge (5) aus dem anderen Vorformlingspeicher (12, 14) zugeführt werden.

## Claims

1. An apparatus (1) for forming plastic preforms (5) into plastic containers (10), having a supply device (2) for supplying the plastic preforms (5) to the apparatus (1), at least one first preform store (12), wherein a plurality of plastic preforms (5) being arranged unsorted in the preform store (12), and having an alignment device (8) for bringing the plastic preforms (5) into a predetermined position before supplying them to the apparatus (1), **characterized in that**
the apparatus (1) has at least one second preform store (14), wherein a plurality of plastic preforms (5) of precisely one production batch can be accommodated in each the first preform store (12) and the second preform store (14), so that a mixing of preforms of different production batches is prevented, and wherein
sensors are provided which monitor the radiation absorption behaviour of the individual preform batches and send this information to the heating device which adjusts the heating power, if necessary, or completely blocks the supply of the new batch if the deviation is too great, in order to force an operator intervention.

2. The apparatus (1) according to claim 1,
**characterized in that**
the apparatus (1) has a control device (6) which is suitable and intended for controlling the supply of the plastic preforms (5) to the apparatus (1) in such a way that firstly only plastic preforms (5) from one of the two preform stores (12, 14) are supplied to the apparatus (1).

3. The apparatus (1) according to claim 2,
**characterized in that**
the control device (6) controls the first preform store (12) and the second preform store (14) in such a way that, after the one preform store (12, 14) has been emptied, the plastic preforms (5) are supplied to the apparatus (1) from the other preform store (12, 14).

4. The apparatus (1) according to claim 1,
**characterized in that**
the supply of the plastic preforms (5) from the first preform store (12) and the supply of the plastic preforms (5) from the second preform store (14) is continuous.

5. The apparatus (1) according to claim 1,
**characterized in that**
a heating device (3) with a plurality of heating elements (4) for heating the plastic preforms (5) is arranged between the apparatus (1) and the supply device (2).

6. The apparatus (1) according to claim 1,
**characterized in that**
the apparatus (1) and in particular the supply device (2) and/or the first and second preform store (12, 14) have at least one sensor device (16) which detects at least one value characteristic of the ability of the preforms (5) to absorb temperature.

7. The apparatus (1) according to claim 5 and 6,
**characterized in that**
the heating device (3) has a further control device (7) which controls the heating power of the heating elements (4) as a function of the characteristic value detected by the sensor device (16).

8. A method for forming plastic preforms (5) into plastic containers (10), wherein a plurality of plastic preforms (5), which are arranged unsorted in a first preform store (12), are supplied to an apparatus (1) for forming plastic preforms (5), and the plastic preforms (5) are brought into a predetermined position before being supplied,
**characterized in that**
at least one first preform store (12) and at least one second preform store (14) are provided, wherein a plurality of plastic preforms (5) of exactly one production batch being arranged in each the first preform store (12) and the second preform store (14), so that a mixing of preforms of different production batches is prevented, and wherein
sensors are provided which monitor the radiation absorption behaviour of the individual preform batches and send this information to the heating device which adjusts the heating power, if necessary, or completely blocks the supply of the new batch if the deviation is too great, in order to force an operator intervention.

9. The method according to claim 8,
**characterized in that**
the plastic preforms (5) are initially supplied to the apparatus (1) from only one of the two preform stores (12, 14).

10. The method according to claim 8,
**characterized in that**
after the one preform store (12, 14) has been emptied, the plastic preforms (5) are supplied to the apparatus (1) from the other preform store (12, 14).

## Revendications

1. Dispositif (1) de façonnage de préformes en matière plastique (5) en récipients en matière plastique (10), avec un système d'amenée (2) pour amener les préformes en matière plastique (5) au dispositif (1), au moins un premier réservoir de préformes (12), dans lequel une pluralité de préformes en matière plastique (5) est disposée de manière non triée dans le réservoir de préformes (12), et avec un système d'orientation (8) pour amener les préformes en matière plastique (5) dans une position prédéfinie avant l'amenée au dispositif (1),
**caractérisé en ce que**
le dispositif (1) présente au moins un deuxième réservoir de préformes (14), dans lequel respectivement une pluralité de préformes en matière plastique (5) d'un lot de production précisément peut être logée dans le premier réservoir de préformes (12) et dans le deuxième réservoir de préformes (14) de manière à empêcher un mélange de préformes de différents lots de production, et dans lequel
des capteurs sont prévus, lesquels surveillent le comportement d'absorption de rayonnement des différents lots de préformes et envoient ces informations à un système de chauffage, lequel adapte, si nécessaire, une puissance de chauffage ou bloque totalement l'amenée d'un nouveau lot en cas d'écart trop important pour forcer l'intervention d'un utilisateur.

2. Dispositif (1) selon la revendication 1,
**caractérisé en ce que**
le dispositif (1) présente un système de commande (6), lequel est adapté pour et se destine à commander l'amenée des préformes en matière plastique (5) au dispositif (1) de telle manière que ne sont amenées au dispositif (1) en premier lieu que les préformes en matière plastique (5) provenant d'un des deux réservoirs de préformes (12, 14).

3. Dispositif (1) selon la revendication 2,
**caractérisé en ce que**
le système de commande (6) pilote de telle manière le premier réservoir de préformes (12) et le deuxième réservoir de préformes (14) que les préformes en matière plastique (5) provenant d'un réservoir de préformes (12, 14) ne sont amenées au dispositif (1) qu'après que l'autre réservoir de préformes (12, 14) a été vidé.

4. Dispositif (1) selon la revendication 1,
**caractérisé en ce que**
l'amenée des préformes en matière plastique (5) provenant du premier réservoir de préformes (12) et l'amenée des préformes en matière plastique (5) provenant du deuxième réservoir de préformes (14) ont lieu en continu.

5. Dispositif (1) selon la revendication 1,
**caractérisé en ce que**
un système de chauffage (3) avec une pluralité d'éléments de chauffage (4) pour réchauffer les préformes en matière plastique (5) est disposé entre le dispositif (1) et le système d'amenée (2).

6. Dispositif (1) selon la revendication 1,
**caractérisé en ce que**
le dispositif (1) et en particulier le système d'amenée (2) et/ou le premier et le deuxième réservoir de préformes (12, 14) présentent au moins un système de capteur (16), lequel détecte au moins une valeur caractéristique de la capacité d'absorption de température des préformes (5).

7. Dispositif (1) selon la revendication 5 et 6,
**caractérisé en ce que**
le système de chauffage (3) présente un autre système de commande (7), lequel commande la puissance de chauffage des éléments de chauffage (4) en fonction de la valeur caractéristique détectée par le système de capteur (16).

8. Procédé de façonnage de préformes en matière plastique (5) en des récipients en matière plastique (10), dans lequel une pluralité de préformes en matière plastique (5), laquelle est disposée de manière non triée dans un premier réservoir de préformes (12), est amenée à un dispositif (1) de façonnage de préformes en matière plastique (5) et les préformes en matière plastique (5) sont amenées dans une position prédéfinie avant l'amenée,
**caractérisé en ce que**
au moins un premier réservoir de préformes (12) et au moins un deuxième réservoir de préformes (14) sont prévus, dans lequel respectivement une pluralité de préformes en matière plastique (5) d'un lot de production précisément est disposée dans le premier réservoir de préformes (12) et dans le deuxième réservoir de préformes (14) de manière à empêcher un mélange de préformes de différents lots de production, et dans lequel des capteurs sont prévus, lesquels surveillent le comportement d'absorption de rayonnement des différents lots de préformes et envoient ces informations à un système de chauffage, lequel adapte, si nécessaire, une puissance de chauffage ou bloque totalement l'amenée d'un nouveau lot en cas d'écart trop important pour forcer l'intervention d'un opérateur.

9. Procédé selon la revendication 8,
**caractérisé en ce que**
les préformes en matière plastique (5) sont amenées au dispositif (1) en premier lieu seulement depuis un des deux réservoirs de préformes (12, 14).

10. Procédé selon la revendication 8,
**caractérisé en ce que**
les préformes en matière plastique (5) provenant d'un réservoir de préformes (12, 14) sont amenées au dispositif (1) après que l'autre réservoir de préformes (12, 14) a été vidé.
